# EUROPEAN PATENT APPLICATION

(11) **EP 2 270 727 A1**
(43) Date of publication of application: **05.01.2011**
(21) Application number: 09163576.3
(22) Date of filing: 24.06.2009
(51) Int. Cl.: G06Q 10/00

(54) **Method and system for rendering data records**

(71) Applicant: RESEARCH IN MOTION LIMITED, Waterloo, Ontario N2L 3W8 (CA)
(72) Inventor: Fritzley, Eric Allan, Waterloo Ontario N2L 5Z5 (CA); Jain, Rohit Rocky, Waterloo Ontario N2L 5Z5 (CA); Logan, Adrian Michael, Waterloo Ontario N2L 5Z5 (CA)
(74) Representative: Rickard, David John

(57) **Abstract**

A method of controlling an electronic device includes retrieving records that satisfy a set of constraints, rendering data from the records in a list on a display, and rendering, in the list, further data from a selected one of the records in the list on the display in response to receipt of an input.

## Description

The present application relates generally to a method and system for rendering data records on a display of an electronic device.

Electronic devices, including portable electronic devices, have gained widespread use and can perform a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and ease of portability. Smaller devices are generally desirable for portability. As a result, the display area for rendering content on handheld devices is limited.

PIM applications permit storage and rendering of PIM records including, for example, calendar, task list, and electronic message records. Such PIM records may be rendered in various views and may permit a user to switch between views for viewing fields of the PIM records in the limited display area available on such handheld devices.

### GENERAL

According to one aspect, there may be provided a method of controlling an electronic device. The method may comprise retrieving records that satisfy a set of constraints, rendering data from the records in a list on a display, and rendering, in the list, further data from a selected one of the records in the list on the display in response to receipt of an input.

According to another aspect, an electronic device may be provided. The electronic device may comprise a display device, an input device, a memory unit, and a processor operably connected to the display device, the input device and the memory unit to execute a program stored in the memory unit to cause the electronic device to retrieve records that satisfy a set of constraints, render data from the records in a list on the display device, and render, in the list, further data from a selected one of the records in the list on the display device in response to receipt, from the input device, of an input.

According to another aspect, a computer program product may be provided. The computer program product may comprise computer-readable medium having computer-readable code embodied therein. The computer-readable code may be executable by a processor of an electronic device to cause the electronic device to retrieve records that satisfy a set of constraints, render data from the records in a list on a display, and render, in the list, further data from a selected one of the records in the list on the display in response to receipt of an input.

The list rendered on the display, such as a list of calendar records, tasks or electronic messages may be a condensed list of data for reviewing or searching, for example, by a user. Thus, for example, data from a time field or fields and data from a subject field may be included in a list of calendar records. Additional information, such as data from an invitee field and data from a notes field is not included in the list. In another example, data from a sender field or recipient field along with data from a subject field may be included in a list of electronic messages. Additional information, such as data from a body of the electronic messages is not included. The condensed list may permit rendering data from a greater number of records. With rendering of such a list, a user may easily search and locate a record of interest while fewer screens may be required to be rendered for user-selection of the record of interest. Further, upon locating a record, the user may simply scroll horizontally, in the orientation in which the list is rendered, to view further pertinent details such as the data from an invitee field and data from a notes field in the case of a list of calendar records or data from a subject field in a list of electronic messages. Advantageously, fewer screens may be required for selecting a record from a list and viewing further data from the record. Processing time and battery power may be used to render each new screen on the display of the portable electronic device as the processor functions to determine what is rendered and where. Thus, each new screen that is rendered in the GUI uses additional processing time and increases power consumption. With fewer screens rendered to provide pertinent information, there may therefore be a corresponding saving in processing time and power consumption, resulting in less delays as a result of processing time and increased battery life between charging of the battery at the portable electronic device.

### BRIEF DESCRIPTION OF THE DRAWINGS

Embodiments of the present application will now be described, by way of example only, with reference to the attached Figures, wherein:
Figure 1 is a block diagram of an example of an embodiment of a portable electronic device;
Figure 2 is an example of a block diagram of a communication subsystem component of Figure 1;
Figure 3 is a block diagram of an example of an implementation of a node of a wireless network;
Figure 4 is a block diagram illustrating components of an example of a configuration of a host system that the portable electronic device can communicate with;
Figure 5 is a flowchart of a method of controlling an electronic device in accordance with the present disclosure;
Figures 6 to 9 show examples of screen shots of a portable electronic device in accordance with one example of the method of Figure 5; and
Figures 10 and 11 show examples of screen shots of a portable electronic device in accordance with another example of the method of Figure 5.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to portable electronic devices. Examples of portable electronic devices include mobile or handheld wireless communication devices such as pagers, cellular phones, cellular smart-phones, wireless organizers, personal digital assistants, computers, laptops, handheld wireless communication devices, wirelessly enabled notebook computers and the like.

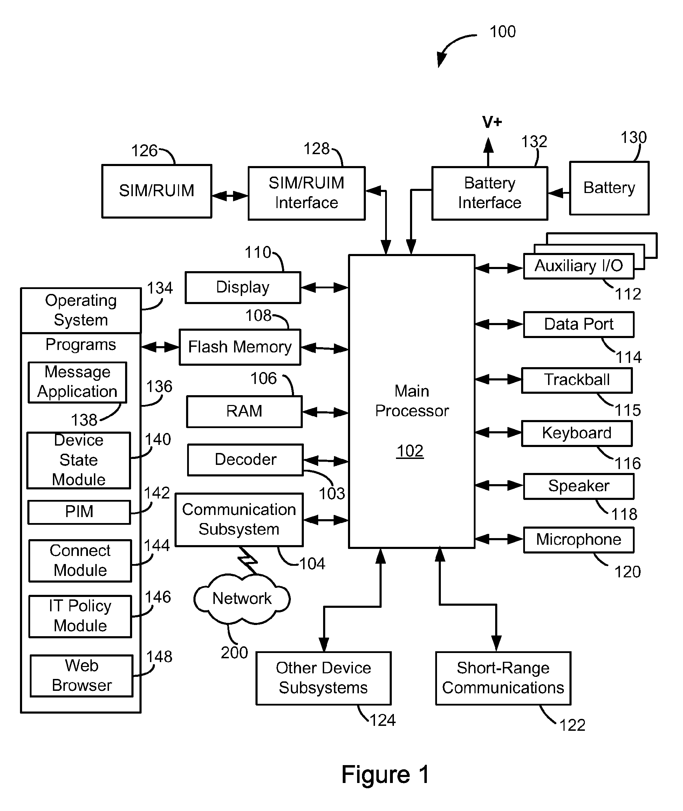

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). To aid the reader in understanding the structure of the portable electronic device and how it communicates with other devices and host systems, reference will now be made to Figures 1 through 4.

Referring first to Figure 1, shown therein is a block diagram of an example of an embodiment of a portable electronic device 100. The portable electronic device 100 includes a number of components such as a main processor 102 that controls the overall operation of the portable electronic device 100. Communication functions, including data and voice communications, are performed through a communication subsystem 104. Data received by the portable electronic device 100 can be decompressed and decrypted by a decoder 103, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 104 receives messages from and sends messages to a wireless network 200. In this example of an embodiment of the portable electronic device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with portable electronic device 100 is a GSM/GPRS wireless network in one example of an implementation, other wireless networks may also be associated with the portable electronic device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks such as EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a trackball 115, a keyboard 116, a speaker 118, a microphone 120, short-range communications 122 and other device subsystems 124.

Some of the subsystems of the portable electronic device 100 perform communication-related functions, whereas other subsystems may provide "resident" or on-device functions. By way of example, the display 110, the trackball 115 and the keyboard 116 may be used for both communication-related functions, such as entering a text message for transmission over the network 200, and device-resident functions such as a calculator or task list.

The portable electronic device 100 can send and receive communication signals over the wireless network 200 after network registration or activation procedures have been completed. Network access is associated with a subscriber or user of the portable electronic device 100. To identify a subscriber, a SIM/RUIM card 126 (i.e. Subscriber Identity Module or a Removable User Identity Module) is inserted into a SIM/RUIM interface 128 in order to communicate with a network. The SIM/RUIM card 126 is a type of a conventional "smart card" that can be used to identify a subscriber of the portable electronic device 100 and to personalize the portable electronic device 100, among other things. In the present embodiment, the portable electronic device 100 is not fully operational for communication with the wireless network 200 without the SIM/RUIM card 126. By inserting the SIM/RUIM card 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical portable electronic device. The SIM/RUIM card 126 may store additional subscriber information for a portable electronic device as well, including datebook (or calendar) information and recent call information. Alternatively, user identification information can also be programmed into the flash memory 108.

The portable electronic device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the portable electronic device 100. Although current technology makes use of a battery, future technologies such as micro fuel cells may provide the power to the portable electronic device 100.

The portable electronic device 100 also includes an operating system 134 and software components 136 to 148 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications are installed on the portable electronic device 100 during its manufacture. Other software applications include a message application 138 that can be any suitable software program that allows a user of the portable electronic device 100 to send and receive electronic messages. Various alternatives exist for the message application 138 as is well known to those skilled in the art. Messages that have been sent or received by the user are typically stored in the flash memory 108 of the portable electronic device 100 or some other suitable storage element in the portable electronic device 100. In at least some embodiments, some of the sent and received messages may be stored remotely from the device 100 such as in a data store of an associated host system that the portable electronic device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the portable electronic device 100 is turned off or loses power.

The PIM 142 includes functionality for organizing and managing data items of interest to the user, such as, but not limited to, e-mail, contacts, calendar events, voice mails, appointments, and task items. PIM applications include, for example, calendar, address book, tasks and memo applications. The PIM applications have the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 100 with respect to such items. This can be particularly advantageous when the host computer system is the portable electronic device subscriber's office computer system.

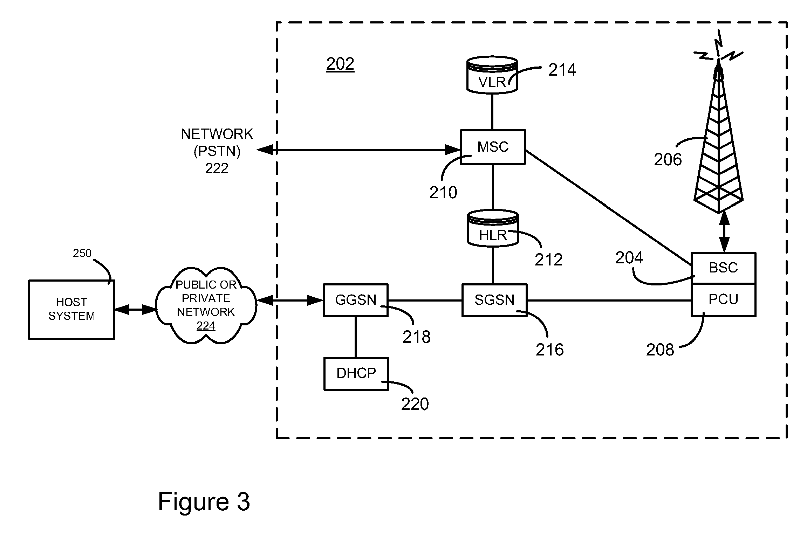

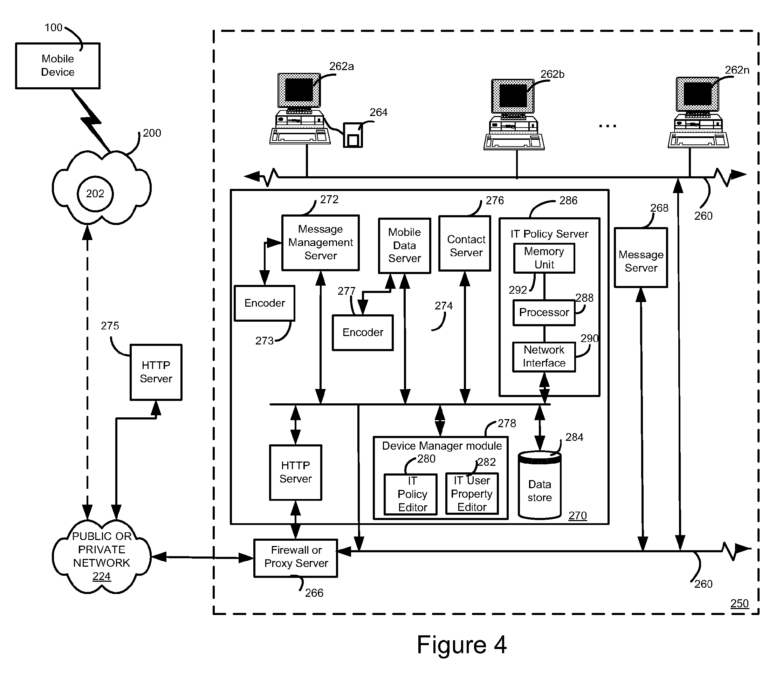

The portable electronic device 100 also includes a connect module 144, and an information technology (IT) policy module 146. The connect module 144 implements the communication protocols that are required for the portable electronic device 100 to communicate with the wireless infrastructure and any host system, such as an enterprise system, that the portable electronic device 100 is authorized to interface with. Examples of a wireless infrastructure and an enterprise system are given in Figures 3 and 4, which are described in more detail below.

The connect module 144 includes a set of APIs that can be integrated with the portable electronic device 100 to allow the portable electronic device 100 to use any number of services associated with the enterprise system. The connect module 144 allows the portable electronic device 100 to establish an end-to-end secure, authenticated communication pipe with the host system. A subset of applications for which access is provided by the connect module 144 can be used to pass IT policy commands from the host system to the portable electronic device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be provided on the portable electronic device 100, including the Web browser 148 for enabling a user to display and interact with text, images, videos, music and other information from a webpage at a website on the world wide web or on a local network.

Still other types of software applications can be installed on the portable electronic device 100. Such software applications can be third party applications, which are added after the manufacture of the portable electronic device 100. Examples of third party applications include games, calculators, utilities, etc.

The additional applications can be loaded onto the portable electronic device 100 through at least one of the wireless network 200, the auxiliary I/O subsystem 112, the data port 114, the short-range communications subsystem 122, or any other suitable device subsystem 124. This flexibility in application installation increases the functionality of the portable electronic device 100 and may provide enhanced on-device functions, communication-related functions, or both. For example, secure communication applications may enable electronic commerce functions and other such financial transactions to be performed using the portable electronic device 100.

The data port 114 enables a subscriber to set preferences through an external device or software application and extends the capabilities of the portable electronic device 100 by providing for information or software downloads to the portable electronic device 100 other than through a wireless communication network. The alternate download path may, for example, be used to load an encryption key onto the portable electronic device 100 through a direct and thus reliable and trusted connection to provide secure device communication.

The data port 114 can be any suitable port that enables data communication between the portable electronic device 100 and another computing device. The data port 114 can be a serial or a parallel port. In some instances, the data port 114 can be a USB port that includes data lines for data transfer and a supply line that can provide a charging current to charge the battery 130 of the portable electronic device 100.

The short-range communications subsystem 122 provides for communication between the portable electronic device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, webpage download, or any other information is processed by the communication subsystem 104 and input to the main processor 102 where the received signal is processed for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the portable electronic device 100 is substantially similar, except that the received signals are output to the speaker 118, and signals for transmission are generated by the microphone 120. Alternative voice or audio I/O subsystems, such as a voice message recording subsystem, can also be implemented on the portable electronic device 100. Although voice or audio signal output is accomplished primarily through the speaker 118, the display 110 can also be used to provide additional information such as the identity of a calling party, duration of a voice call, or other voice call related information.

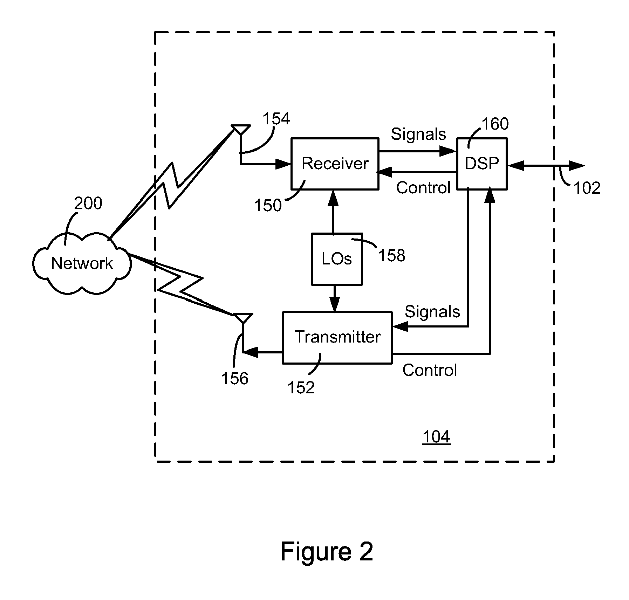

Referring now to Figure 2, an example of a block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the portable electronic device 100 is intended to operate. Thus, it should be understood that the design illustrated in Figure 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the portable electronic device 100 and the wireless network 200 can contain one or more different channels, typically different RF channels, and associated protocols used between the portable electronic device 100 and the wireless network 200. An RF channel is a limited resource that should be conserved, typically due to limits in overall bandwidth and limited battery power of the portable electronic device 100.

When the portable electronic device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to Figure 3, a block diagram of an example of an implementation of a node 202 of the wireless network 200 is shown. In practice, the wireless network 200 comprises one or more nodes 202. In conjunction with the connect module 144, the portable electronic device 100 can communicate with the node 202 within the wireless network 200. In the example of an implementation of Figure 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable portable electronic devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the portable electronic device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from portable electronic devices within its cell via the station 206. The fixed transceiver equipment normally performs such functions as modulation and possibly encoding and/or encryption of signals to be transmitted to the portable electronic device 100 in accordance with particular, usually predetermined, communication protocols and parameters, under control of its controller. The fixed transceiver equipment similarly demodulates and possibly decodes and decrypts, if necessary, any communication signals received from the portable electronic device 100 within its cell. Communication protocols and parameters may vary between different nodes. For example, one node may employ a different modulation scheme and operate at different frequencies than other nodes.

For all portable electronic devices 100 registered with a specific network, permanent configuration data such as a user profile is stored in the HLR 212. The HLR 212 also contains location information for each registered portable electronic device and can be queried to determine the current location of a portable electronic device. The MSC 210 is responsible for a group of location areas and stores the data of the portable electronic devices currently in its area of responsibility in the VLR 214. Further, the VLR 214 also contains information on portable electronic devices that are visiting other networks. The information in the VLR 214 includes part of the permanent portable electronic device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each portable electronic device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given portable electronic device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a portable electronic device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each portable electronic device 100 must be assigned to one or more APNs and portable electronic devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a portable electronic device 100 is not using its PDP Context, the PDP Context can be de-allocated and the IP address returned to the IP address pool managed by the DHCP server 220.

Referring now to Figure 4, shown therein is a block diagram illustrating components of an example of a configuration of a host system 250 that the portable electronic device 100 can communicate with in conjunction with the connect module 144. The host system 250 will typically be a corporate enterprise or other local area network (LAN), but may also be a home office computer or some other private system, for example, in variant implementations. In this example shown in Figure 4, the host system 250 is depicted as a LAN of an organization to which a user of the portable electronic device 100 belongs. Typically, a plurality of portable electronic devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's portable electronic device 100 is situated on a LAN connection. The cradle 264 for the portable electronic device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the portable electronic device 100, and may be particularly useful for bulk information updates often performed in initializing the portable electronic device 100 for use. The information downloaded to the portable electronic device 100 may include certificates used in the exchange of messages.

It will be understood by persons skilled in the art that the user computers 262a-262n will typically also be connected to other peripheral devices, such as printers, etc. which are not explicitly shown in Figure 4. Furthermore, only a subset of network components of the host system 250 are shown in Figure 4 for ease of exposition, and it will be understood by persons skilled in the art that the host system 250 will comprise additional components that are not explicitly shown in Figure 4 for this example of a configuration. More generally, the host system 250 may represent a smaller part of a larger network (not shown) of the organization, and may comprise different components and/or be arranged in different topologies than that shown in the example of an embodiment of Figure 4.

To facilitate the operation of the portable electronic device 100 and the wireless communication of messages and message-related data between the portable electronic device 100 and components of the host system 250, a number of wireless communication support components 270 can be provided. In some implementations, the wireless communication support components 270 can include a management server 272, a mobile data server (MDS) 274, a web server, such as Hypertext Transfer Protocol (HTTP) server 275, a contact server 276, and a device manager module 278. HTTP servers can also be located outside the enterprise system, as indicated by the HTTP server 275 attached to the network 224. The device manager module 278 includes an IT Policy editor 280 and an IT user property editor 282, as well as other software components for allowing an IT administrator to configure the portable electronic devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the portable electronic devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this example of an embodiment, the portable electronic device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the portable electronic device 100. The wireless VPN router allows a VPN connection to be established directly through a specific wireless network to the portable electronic device 100. The wireless VPN router can be used with the Internet Protocol (IP) Version 6 (IPV6) and IP-based wireless networks. This protocol can provide enough IP addresses so that each portable electronic device has a dedicated IP address, making it possible to push information to a portable electronic device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the portable electronic device 100 in this alternative implementation.

Messages intended for a user of the portable electronic device 100 are initially received by a message server 268 of the host system 250. Such messages may originate from any number of sources. For instance, a message may have been sent by a sender from the computer 262b within the host system 250, from a different portable electronic device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some implementations of the message server 268 include a Microsoft Exchange™ server, a Lotus Domino™server, a Novell Groupwise™server, or another suitable mail server installed in a corporate environment. In some implementations, the host system 250 may comprise multiple message servers 268. The message server provides additional functions including PIM functions such as calendaring, contacts and tasks and supports data storage.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the portable electronic device 100. Alternatively, the data store associated with the message server 268 can store all of the messages for the user of the portable electronic device 100 and only a smaller number of messages can be stored on the portable electronic device 100 to conserve memory. For instance, the most recent messages (i.e. those received in the past two to three months for example) can be stored on the portable electronic device 100.

When operating the portable electronic device 100, the user may wish to have e-mail messages retrieved for delivery to the portable electronic device 100. The message application 138 operating on the portable electronic device 100 may also request messages associated with the user's account from the message server 268. The message application 138 may be configured (either by the user or by an administrator, possibly in accordance with an organization's IT policy) to make this request at the direction of the user, at some pre-defined time interval, or upon the occurrence of some pre-defined event. In some implementations, the portable electronic device 100 is assigned its own e-mail address, and messages addressed specifically to the portable electronic device 100 are automatically redirected to the portable electronic device 100 as they are received by the message server 268.

The management server 272 can be used to specifically provide support for the management of, for example, messages, such as e-mail messages, that are to be handled by portable electronic devices. Generally, while messages are still stored on the message server 268, the management server 272 can be used to control when, if, and how messages are sent to the portable electronic device 100. The management server 272 also facilitates the handling of messages composed on the portable electronic device 100, which are sent to the message server 268 for subsequent delivery.

For example, the management server 272 may monitor the user's "mailbox" (e.g. the message store associated with the user's account on the message server 268) for new e-mail messages, and apply user-definable filters to new messages to determine if and how the messages are relayed to the user's portable electronic device 100. The management server 272 may also, through an encoder 273, compress messages, using any suitable compression technology (e.g. YK compression, and other known techniques) and encrypt messages (e.g. using an encryption technique such as Data Encryption Standard (DES), Triple DES, or Advanced Encryption Standard (AES)), and push them to the portable electronic device 100 via the shared network infrastructure 224 and the wireless network 200. The management server 272 may also receive messages composed on the portable electronic device 100 (e.g. encrypted using Triple DES), decrypt and decompress the composed messages, re-format the composed messages if desired so that they will appear to have originated from the user's computer 262a, and reroute the composed messages to the message server 268 for delivery.

Certain properties or restrictions associated with messages that are to be sent from and/or received by the portable electronic device 100 can be defined (e.g. by an administrator in accordance with IT policy) and enforced by the management server 272. These may include whether the portable electronic device 100 may receive encrypted and/or signed messages, minimum encryption key sizes, whether outgoing messages must be encrypted and/or signed, and whether copies of all secure messages sent from the portable electronic device 100 are to be sent to a pre-defined copy address, for example.

The management server 272 may also be adapted to provide other control functions, such as only pushing certain message information or pre-defined portions (e.g. "blocks") of a message stored on the message server 268 to the portable electronic device 100. For example, in some cases, when a message is initially retrieved by the portable electronic device 100 from the message server 268, the management server 272 may push only the first part of a message to the portable electronic device 100, with the part being of a pre-defined size (e.g. 2 KB). The user can then request that more of the message be delivered in similar-sized blocks by the management server 272 to the portable electronic device 100, possibly up to a maximum pre-defined message size. Accordingly, the management server 272 facilitates better control over the type of data and the amount of data that is communicated to the portable electronic device 100, and can help to minimize potential waste of bandwidth or other resources.

The MDS 274 encompasses any other server that stores information that is relevant to the corporation. The mobile data server 274 may include, but is not limited to, databases, online data document repositories, customer relationship management (CRM) systems, or enterprise resource planning (ERP) applications. The MDS 274 can also connect to the Internet or other public network, through HTTP server 275 or other suitable web server such as an File Transfer Protocol (FTP) server, to retrieve HTTP webpages and other data. Requests for webpages from the portable electronic device 100 are typically routed through MDS 274 and then to HTTP server 275, through suitable firewalls and other protective mechanisms. The web server then retrieves the webpage over the Internet, and returns it to MDS 274. As described above in relation to management server 272, MDS 274 is typically provided, or associated, with an encoder 277 that permits retrieved data, such as retrieved webpages, to be compressed, using any suitable compression technology (e.g. YK compression, and other known techniques), and encrypted (e.g. using an encryption technique such as DES, Triple DES, or AES), and then pushed to the portable electronic device 100 via the shared network infrastructure 224 and the wireless network 200.

The contact server 276 can provide information for a list of contacts for the user in a similar fashion as the address book on the portable electronic device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the management server 272, the MDS 274, the HTTP server 275, the contact server 276, the device manager module 278, the data store 284 and the IT policy server 286 do not need to be implemented on separate physical servers within the host system 250. For example, some or all of the functions associated with the management server 272 may be integrated with the message server 268, or some other server in the host system 250. Alternatively, the host system 250 may comprise multiple management servers 272, particularly in variant implementations where a large number of portable electronic devices need to be supported.

The device manager module 278 provides an IT administrator with a graphical user interface with which the IT administrator interacts to configure various settings for the portable electronic devices 100. As mentioned, the IT administrator can use IT policy rules to define behaviors of certain applications on the portable electronic device 100 that are permitted such as phone, web browser or Instant Messenger use. The IT policy rules can also be used to set specific values for configuration settings that an organization requires on the portable electronic devices 100 such as auto signature text, WLAN/VoIP/VPN configuration, security requirements (e.g. encryption algorithms, password rules, etc.), specifying themes or applications that are allowed to run on the portable electronic device 100, and the like.

As indicated above, the portable electronic device 100 includes the Personal Information Manager (PIM) 142 that includes functionality for organizing and managing data records of interest to the user, such as, but not limited to, e-mail, contacts, calendar events, voice mails, appointments, and task items. PIM applications include, for example, calendar, address book, tasks and memo applications.

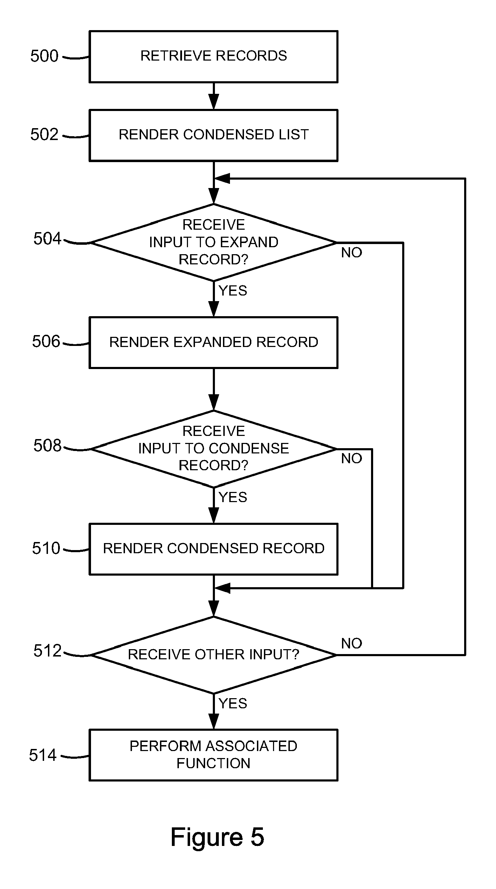

Figure 5 is a flowchart of a method of controlling an electronic device. Generally, there is provided a method of controlling an electronic device such as the portable electronic device 100. PIM records that are stored at the portable electronic device 100 and that satisfy a set of constraints are retrieved 500 and data from the records retrieved is rendered 502 in a list on the display 110. Further data from a selected one of the records in the list is rendered 506 in the list on the display 110 in response to receipt 504 of an input.

The present method may be carried out when a PIM application, such as a calendar application, a task application or an electronic message application, is executed by the processor 102. Such an application may be executed in response to receipt of a user-selection of an icon or an option from a list, for example. An embodiment of the present method will now be described with continued reference to Figures 5.

PIM records, such as calendar records, task records or electronic message records, that satisfy a set of constraints are retrieved 500 from the memory 108. The records are ordered and data from the records is rendered 502 in a list on the display 110. A determination is made 504 if an input, such as a scrolling input in a horizontal direction in the orientation in which the list is rendered, is received. If a determination is made 504 that the input is not received, the method continues at step 512. If, on the other hand, a determination is made 504 that the input is received, further data from a selected one of the records is rendered 506 in the list by expanding the vertical area of the display in which the selected one of the records is displayed to thereby render data from further fields of the selected record.

A determination is made 508 as to whether or not a further input, such as a scrolling input in the opposite horizontal direction in the orientation in which the list is rendered, is received. If a determination is made 508 that the input is not received, the method continues at step 512. If, on the other hand, a determination is made 508 that the further input is received, the data record for which further data was rendered, is condensed by re-rendering the list on the display 110, absent the further data that was rendered at step 506.

A determination is then made 512 as to whether or not further input is received. If it is determined that further input is not received, the method returns to step 504. Otherwise, the method continues at step 514 where a function that is associated with the further input received, is carried out.

The method shown and described with reference to FIG. 5 is simplified for the purpose of the present explanation and other steps and substeps may be included.

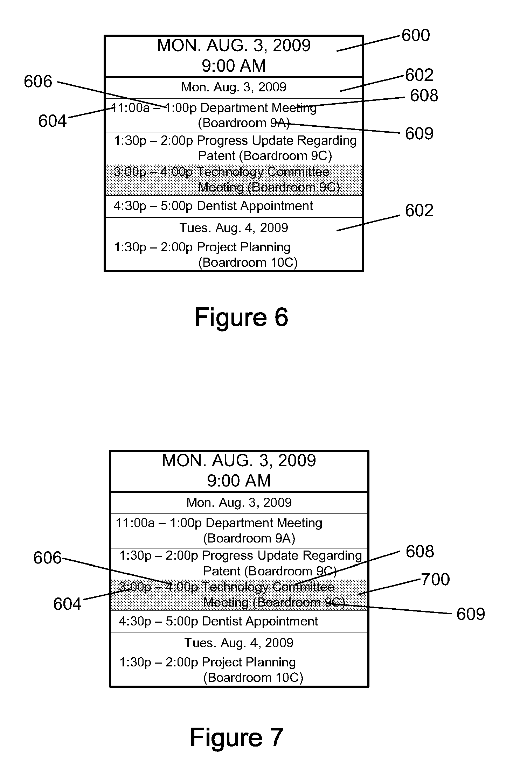

A specific example of the method of Figure 5 will now be described with reference to Figures 6 to 9. As indicated above, the portable electronic device 100 includes the Personal Information Manager (PIM) 142 that includes functionality for organizing and managing data records. For the purpose of the present example, calendar records are stored in the flash memory 108 at the portable electronic device 100. Each of the calendar records includes several data fields, including, for example, a subject field, a location field, a start time field, an end time field, an invited field and a notes field. The calendar records may be received, for example, from the host system 250 and stored at the portable electronic device 100, or may be created and stored at the portable electronic device 100.

Selection of a calendar option or icon results in execution of the calendar application and a default calendar view is displayed. The default view may be an agenda view as described further below or may be another view that may be changed to the agenda view.

Calendar records that satisfy a set of constraints are retrieved 500 from the memory 108. The constraints include, for example, a specified number of calendar records that are closest to a current time and date maintained by an internal clock at the portable electronic device 100. For example, 10 calendar events, that have an earliest start time and date after the current time and date, may be retrieved. Alternatively, the constraints may be a start or end time and date that falls within a specified time span. For example, all calendar records within a time span related to the current time and date may be retrieved.

The records are ordered based first on start time and date and, if more than one record includes the same start time and date, then by end time and date. Data from the records is rendered 502 in the form of a list in the agenda view on the display 110. The data that is rendered in the agenda view of the present example includes data from the start time and date field, the end time and date field and the subject field of the retrieved calendar records. As shown in Figure 6, a current time and date is shown in a banner 600 at the top of the agenda view and calendar records are listed under date headings 602. Each calendar record listed includes the start time 604, end time 606, subject 608, and location 609. The start time 604 and end time 606 are always shown. The subject 608 and location 609 are concatenated into one string. A maximum of two lines of the subject 608 and location 609 are shown.. Thus, the agenda view provides a condensed list of calendar records and the list includes data from only some of the data fields of the calendar records. Therefore, data from other fields of the calendar records is not rendered.

Each of the calendar records listed in the agenda view is selectable by, for example, user scrolling using the trackball 115 to highlight a desired one of the calendar records. In the example shown in Figure 7, a calendar record 700 is selected by scrolling vertically, through the list, to highlight the calendar record 700. As shown, the start time 604 of the calendar record 700 is 3:00 pm, the end time 606 is 4:00 pm, the subject 608 of the calendar record is "Technology Committee Meeting" and the location 609 is "Boardroom 9C".

It is determined 504 that an input is received. In the present example, the input is received from the trackball 115 and is a horizontal scrolling input, or a scrolling input in a sequential text direction, from left to right in the orientation in which the agenda view is rendered.

In response to receiving the scrolling input from a left to right rolling of the trackball 115, thereby scrolling in a sequential text direction, further data from the selected one of the records is rendered 506 in the list. For the purpose of the present example, the subject 608 is rendered on one line and the location field is rendered on a line separate from the line that the subject field is rendered on. The invited field, and the notes field for the calendar record 700, are also rendered by expanding the vertical area of the list on the display in which the calendar record 700 is rendered. Thus, the selected calendar record 700 is rendered in the agenda view with the location 609, invitees 802 and notes 804. In the present example, the location 609 is "Boardroom 9C", the invitees 802 include "J. Davies" and "D. Lewis" and the notes 804 include "A copy of the agenda will be circulated prior to the meeting".

A determination is made 508 as to whether or not a further input, such as a scrolling input in the opposite horizontal direction in the orientation in which the list is rendered, is received. For the purpose of the present example, a determination is made 508 that the input is received. The input is received from the trackball 115 and is a scrolling input, rolling from right to left in the orientation in which the agenda view is rendered, opposite to the scrolling direction from the input received at step 504.

The calendar record 700 is then condensed 510, reducing the vertical area of the display in which the calendar record 700 is rendered, thereby returning to the view shown in Figure 7, absent the data from the location, invited and notes fields from the calendar record.

A determination is then made 512 as to whether or not other input is received and, if not, the method returns to step 504. Otherwise, the method continues at step 514 where a function, that is associated with the further input received, is carried out.

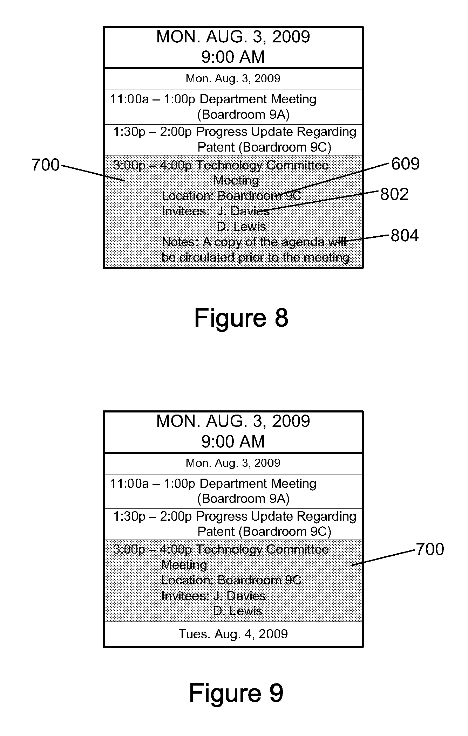

The screen shots shown are provided for the purpose of describing examples. It is contemplated that data from each of the further fields including the location field, the invited field and the notes field may not be rendered upon receipt of the scrolling input from left to right from the trackball 115. For example, data from only the location field and the invited field may be rendered, as shown in the calendar record 700 in the agenda view of Figure 9. Further, data from additional fields may be rendered such that data from a further field is rendered upon receipt of a first scrolling input from left to right and data from still a further field is rendered upon receipt of a second scrolling input from left to right. For example, the location is rendered on a new line upon receipt of a first scrolling input from left to right. A further scrolling input from left to right results in rendering of the invitees and still a further scrolling input from left to right results in rendering of the notes. Thus, the selected record expands with each scrolling input from left to right until the selected record is fully expanded.

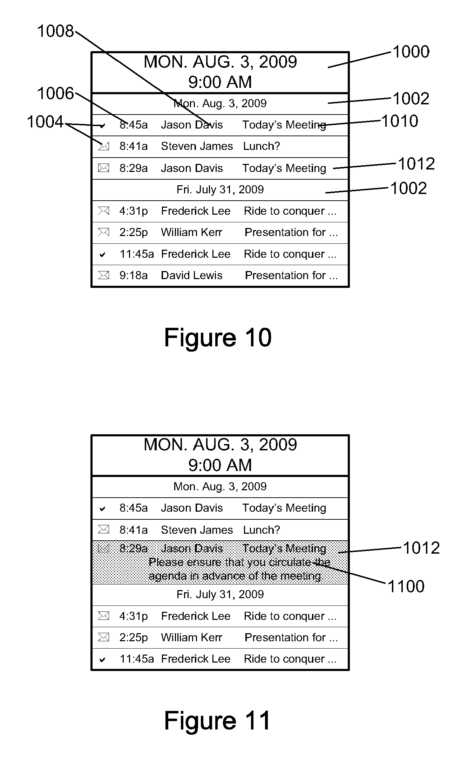

Another specific example of the method of Figure 5 will now be described with reference to Figures 10 and 11. As indicated above, the portable electronic device 100 includes the Personal Information Manager (PIM) 142 that includes functionality for organizing and managing data records. For the purpose of the present example, electronic message records are stored in the flash memory 108 at the portable electronic device 100. Each of the electronic message records includes several data fields, including, for example, a correspondent field, a subject field, a time and date field, and a body field.

The electronic message records may be received, for example, from the host system 250, and stored at the portable electronic device 100, or may be created, sent from and stored at the portable electronic device 100. Selection of a message option or icon results in execution of the message application and a default message view is displayed. The default message view may be a list of messages sent and received as described further below.

Message records that satisfy a set of constraints are retrieved 500 from the memory 108. The constraints include, for example, a specified number of message records sent or received at time closest to a current time and date maintained by an internal clock at the portable electronic device 100. For example, the most recently received 15 message records may be retrieved.

The message records are ordered based on time and date of receipt or sending. Data from the message records is rendered 502 in the form of a list on the display 110. The data that is rendered includes data from the correspondent field, the subject field, and time and date field. As shown in Figure 10, a current time and date is shown in a banner 1000 at the top of the list and message records are listed under date headings 1002. Each message record listed includes an icon 1004 that indicates whether the message was sent or received, a time 1006 at which the message was sent or received, a correspondent 1008, and subject 1010. Thus, the message view is a condensed list of message records and the list includes data from only some of the data fields of the message records. Therefore, data from other fields of the message records, including the body field, is not rendered.

Each of the message records is selectable by, for example, user scrolling using the trackball 115 to highlight a desired one of the message records. For the purpose of the present example, a message record 1012 is selected by scrolling to highlight the message record 1012. As shown, the time 1006 of receipt of the message record 1012 is 8:29 am, the correspondent 1008 (or sender) is "Jason David", and the subject 1010 of the message record is "Today's Meeting".

It is determined 504 that an input is received. In the present example, the input is received from trackball 115 and is a scrolling input from left to right in the orientation in which the agenda view is rendered.

In response to receiving the scrolling input from left to right from the trackball 115, further data from the selected one of the message records is rendered 506 in the list. For the purpose of the present example, data from the body field for the message record 1012, is rendered by expanding the vertical area of the display in which the message record 1012 is rendered. Thus, the selected message record 1012 is rendered with the body. In the present example, the body 1100 is "Please ensure that you circulate the agenda in advance of the meeting".

A determination is made 508 as to whether or not a further input, such as a scrolling input in the opposite horizontal direction in the orientation in which the list is rendered, is received. For the purpose of the present example, a determination is made 508 that the input is received. The input is received from the trackball 115 and is a scrolling input from right to left in the orientation in which the agenda view is rendered, opposite to the scrolling direction from the input received at step 504.

The message record 1012 is then condensed 510, reducing the vertical area of the display in which the message record 1012 is rendered, thereby returning to the view shown in Figure 10, absent the data from the body field of the calendar record.

A determination is then made 512 as to whether or not other input is received and, if not, the method returns to step 504. Otherwise, the method continues at step 514 where a function, that is associated with the further input received, is carried out.

Again, the screen shots shown are provided for the purpose of describing examples. Different data from different data fields may be shown. Further, data from additional fields may be rendered such that data from a further field is rendered upon receipt of scrolling input from left to right.

In other embodiments, the portable electronic device includes, for example, a touch screen for input and the input received at step 504 and step 508 of Figure 5 is input from the touch screen display.

While the embodiments described herein are directed to particular implementations of the electronic device and method of controlling the electronic device, the above-described embodiments are intended to be examples. It will be understood that alterations, modifications and variations may be effected without departing from the scope of the present disclosure.

## Claims

1. A method of controlling an electronic device (100) having a display (110), the method comprising:
retrieving records that satisfy a set of constraints;
rendering data, from the records, in a list on the display (110);
receiving an input; and
rendering in the list, in response to receipt of the input, further data from a selected one of the records in the list.

2. The method according to claim 1, wherein the input comprises a scrolling input in a first direction.

3. The method according to claim 2, wherein the scrolling input in the first direction comprises a scrolling input in a sequential text direction.

4. The method according to claim 3, wherein the scrolling input in the first direction comprises a scrolling input in a horizontal direction from left to right.

5. The method according to any one of claims 1 to 4, wherein rendering further data comprises expanding an area of the display (110) in which the selected one of the records is displayed.

6. The method according to any one of claims 1 to 5, comprising:
re-rendering the list on the display (110), absent the further data from the selected one of the records, in response to receipt of a further input.

7. The method according to claim 6, wherein the input comprises a scrolling input in a first direction, and the further input comprises a scrolling input in a second direction opposite to the first direction.

8. The method according to any one of claims 1 to 7, wherein rendering data from the records comprises rendering data from at least one field of each of the records.

9. The method according to claim 8, wherein rendering further data comprises rendering data from further fields of the selected one of the records.

10. The method according to any one of claims 1 to 9, wherein the set of constraints comprises a set of time constraints.

11. The method according to any one of claims 1 to 9, wherein the records comprise one of calendar data records or electronic message records.

12. An electronic device (100) comprising:
a display device (110);
an input device (115);
a memory unit (108); and
a processor (102) operably connected to the display device (110), the input device (115) and the memory unit (108) to execute a program stored in the memory unit (108) to cause the electronic device (100) to carry out the method of any one of claims 1 to 11.

13. A computer program product comprising computer-readable storage medium having computer-readable code embodied therein for execution by a processor (102) of an electronic device (100) to cause the electronic device (100) to carry out the method of any one of claims 1 to 11.

## Amended claims

### Amended claims in accordance with Rule 137(2) EPC.

**1.** A method of controlling an electronic device (100) having a display (110), the method comprising:
retrieving records that satisfy a set of constraints;
rendering data, from fields of the records, in a list on the display (110);
receiving a first input comprising a scrolling input in a first direction;
rendering in the list, in response to receipt of the first input, further data from at least one further field of a selected one of the records in the list; and
rendering the data in the list on the display (110), absent the further data in response to receipt of a further input comprising a scrolling input in a second direction, opposite to the first direction.

**2.** The method according to claim 1, wherein the scrolling input in the first direction comprises a scrolling input in a sequential text direction.

**3.** The method according to claim 2, wherein the scrolling input in the first direction comprises a scrolling input in a horizontal direction from left to right.

**4.** The method according to any one of claims 1 to 3, wherein rendering further data comprises expanding an area of the display (110) in which the selected one of the records is displayed.

**5.** The method according to any one of claims 1 to 4, wherein the set of constraints comprises a set of time constraints.

**6.** The method according to any one of claims 1 to 4, wherein the records comprise one of calendar data records or electronic message records.

**7.** An electronic device (100) comprising:
a display device (110);
an input device (115);
a memory unit (108); and
a processor (102) operably connected to the display device (110), the input device (115) and the memory unit (108) to execute a program stored in the memory unit (108) to cause the electronic device (100) to carry out the method of any one of claims 1 to 6.

**8.** A computer program product comprising computer-readable storage medium having computer-readable code embodied therein for execution by a processor (102) of an electronic device (100) to cause the electronic device (100) to carry out the method of any one of claims 1 to 6.
